# EUROPEAN PATENT SPECIFICATION

(11) **EP 2 058 169 B1**
(45) Date of publication and mention of the grant of the patent: **26.05.2010**
(21) Application number: 07120284.0
(22) Date of filing: 08.11.2007
(51) Int. Cl.: B60N 2/48, B60R 11/02, B60N 2/70

(54) **Mounting arrangement**
Montageanordnung
Agencement d'assemblage

(43) Date of publication of application: 13.05.2009
(73) Proprietor: Ford Global Technologies, LLC, Dearborn, MI 48126 (US)
(72) Inventor: Eriksson, Mats, S-417 04 Göteborg (SE); von Eichwald, Tor, S-422 43 Hisings Backa (SE)
(74) Representative: Ekwall, Peter

(56) References cited:
- EP-A- 1 655 177
- DE-A1-102005 058 113
- DE-U1-202004 008 944

## Description

### TECHNICAL FIELD

The present invention relates to a mounting arrangement for an infotainment unit in a vehicle, which mounting arrangement provides a rigid fastening of the infotainment unit, to the head rest of a vehicle, to fulfill collision requirements. The present invention further relates to allow mounting of an infotainment unit on a rear surface of a headrest in a vehicle, independent of the size of the infotainment unit and independent of the upholsteries design of the head rest.

### BACKGROUND ART

Many vehicle interiors are provided with one or more infotainment units on rear surfaces of vehicle seats. Each infotainment unit is fastened at its lower part, to the structural frame of the seat back and/or lower part of the head rest. The fastening of the infotainment unit at its lower part result in that the majority of the infotainment unit not is attached and tends to shiver and shake during a ride with the vehicle, which result in that the viewer gets an unattractive experience. Accordingly, this type of fastening also results in a non-solid fastening of the infotainment unit which will not fulfil the rules and regulations according to the collision requirements. A fastening of an infotainment unit at its lower part, to the structural frame of the seat back, is fragile since the design creates a lever which extends from the lower part and the upper part of the infotainment unit. The created lever will lead to a weak structural strength of the fastening of the infotainment unit, when e.g. children are careless and hanging on to the infotainment unit e.g. when getting into and out of the vehicle.

One way to mount the infotainment unit is to mount it into the head rest of a seat, which imply that a cut out must be made for the infotainment unit and its wiring in the upholstery of the head rest. This kind of attachment of the infotainment unit imply that the size of the infotainment unit is limited to the size of the head rest, approximately 7 inches, to provide an attractive design, and separate upholsteries for all variants of head rests must be available for all interior colours and upholstery trimmings.

Prior art arrangements for attaching rear seat entertainment systems to the rear surfaces of head restraints are for example known from EP 1 655 177, upon which the two-part form of claim 1 is based. A monitor is connected to a holding plate, comprising a supporting bracket and a mounting part. The mounting part is connectable to a structural frame part of a seat back and the supporting bracket consists of a bent arm, which has locking recesses for surrounding holding rods of a head restraint.

US 2007/102972 describes another arrangement for attaching rear seat entertainment systems to the rear surface of a head restraint. A monitor provided in a housing is fastened on a vehicle seat. The housing is attached to the upper part of the back rest by a fastening device connected to a frame part of the backrest.

One object of the present invention is to provide an improved mounting arrangement for an infotainment unit, which provides a solid fastening of the infotainment unit which will fulfil the rules and regulations according to the collision requirements and structural strength.

It is another object of the invention to provide a mounting arrangement for an infotainment unit, which is fixed to the head rest over the majority of the extension of the infotainment unit, to provide a solid fastening of the infotainment unit to provide the viewer with an attractive experience.

It is a further object of the invention to provide a mounting arrangement for an infotainment unit, which provides a design where the attachment of the infotainment unit is concealed and attractive to the user.

### DISCLOSURE OF INVENTION

The above problems have been solved by a method and an arrangement according to the appended claims.

In the description below, there are given directions such as forwards, backwards, downwards, upwards etc. and these are with reference to the front and rear of the vehicle, when it is driven in a direction forwards.

According to a preferred embodiment, the invention relates to a mounting arrangement for an infotainment unit in a vehicle. The infotainment units can inter alia be DVD-players, monitors for games etc. The mounting arrangement comprises supporting rods embedded in a head rest and the supporting rods are mounted on a back rest of a seat. A plate is attached to the supporting rods and a housing, and the infotainment unit is attached to the housing. A bracket is embedded into the headrest, and which bracket is attached to the supporting rods, either snapped or moulded onto the supporting rods.

The bracket is provided with protrusions, which are provided with through holes to attach the housing to the supporting rods. The housing is attached to the supporting rods with fastening means. The protrusions are directed backwards, towards the housing, and the protrusions extend on a level with a rear surface of the head rest.

The housing has a part protruding forwards, and the protruding part is placed between the back rest and the head rest. The protruding part is attached to the plate by fastening means.

In an alternative embodiment the protrusions are made in a collapsible and energy absorbing material, to be able to absorb impact forces on the infotainment unit and the housing. In another alternative embodiment the protrusions are made to collapse by expanding and ride over threads of the fastening means of the housing.

In the alternative embodiment wherein the protrusions are collapsible, the housing is attached to the plate by a joint axis, provided on a rear edge of the plate. The joint axis allows the housing to turn during an impact. During an impact the protrusions are deformed and the housing is rotated around the rotation joint, this not to break the lower attachment of the mounting.

In other alternative embodiments the protrusions can be directed downwards, towards the back rest, towards the sides of the vehicle, or upwards towards the roof of the vehicle, wherein the protrusions are fastened with fastening means in the housing. The housing has mounting holes which are designed by analogy with the extension direction of the protrusions.

In an alternative embodiment, a bellow is provided between the housing and the infotainment unit to allow the user to rotate and angle the screen for optimum reading angle. Instead of a bellow, the housing and the infotainment unit can be allowed to slide into and out of each other, to create an optimum reading angle. The rotation joint, around which the infotainment units is possible to angle, is placed horizontally in the lower, middle or upper position between the housing and the infotainment unit.

The method for mounting an infotainment unit on a rear surface of a head rest is made in a number of steps. The method comprises the step of mounting of a bracket on supporting rods. The bracket is attached on the supporting rods either by moulding, or by providing the bracket with attachments shaped like snap-in attachments, which attachments are snapped onto the supporting rods. Further the method comprises the step of embedding the bracket and the supporting rods in a resilient and expanded material. Thus, the resilient and expanded material constitutes the cushioning part of the head rest. The method includes as well making of holes in the resilient and expanded material to uncover the protrusions of the bracket.

After the holes are made to uncover the protrusions, fastening means are provided to fasten the infotainment unit and its housing to the bracket. Further, the housing is attached to a plate, with fastening means, which plate is attached to the supporting rods of the head rest. The plate is attached to the supporting rods by sliding the plate onto the supporting rods. The infotainment unit is applied to the housing, and fastened by screws or snap-on fasteners.

The assembled infotainment unit i.e. the housing, the headrest with its bracket, plate and the supporting rods, is mounted on the back rest, by sliding the support bars into the back rest. Whereafter the electrical components are assembled and the assembled infotainment unit is pushed down to a locked position in the back rest.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows an isometric view of a holder for an infotainment unit, in an assembled state, mounted on a head rest and a back rest;
- Figure 2: shows an isometric view according to Fig. 2;
- Figure 3: shows an exploded view of the holder for the infotainment unit and an attachment plate;
- Figure 4: shows the mounting arrangement according to the invention; and
- Figure 5: shows a part of the mounting arrangement according to the invention;

### EMBODIMENTS OF THE INVENTION

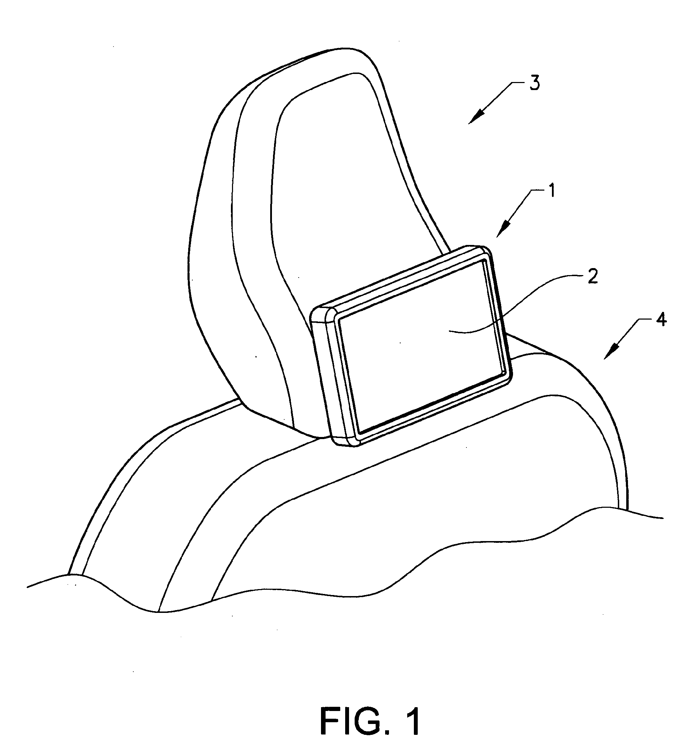

Figure 1 shows an isometric view, shown from behind, of a holder 1, in which an infotainment unit 2 is provided. The holder 1 is provided between a head rest 3 and a back rest 4, and on a rear surface of a head rest 3 in a vehicle, this to provide an appropriate visual angle for the viewer seated in a seat behind the seat provided with the infotainment unit 2. The holder 1 is designed to provide attachment of the infotainment unit 2, which holder 1 conceal the attachment points of the holder 1 and is thus attractive to the user.

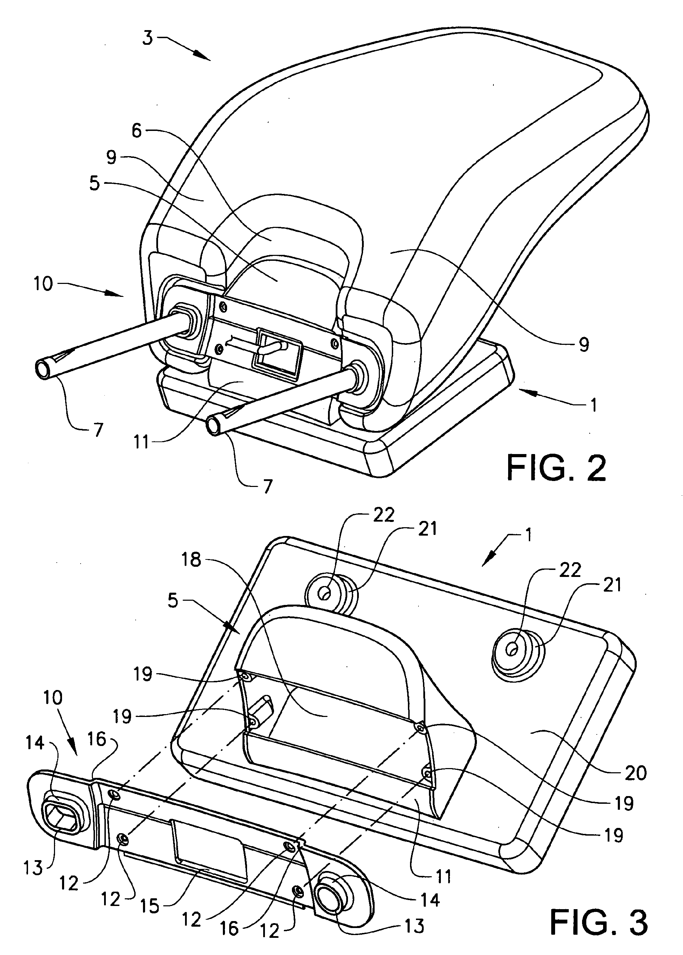

Figure 2 shows an isometric view, shown from the front of the head rest 3, wherein the holder 1 is attached to the head rest 3. The holder 1 has a protruding part 5 which is complementary designed according to a recess 6 in the lower part of the head rest 3, this to achieve a strong design with respect to collision requirements. Supporting rods 7 are attached in the head rest 3, preferably moulded into the head rest 3, at the moulding operation of the head rest 3. The head rest 3 is preferably built up of a resilient end expanded material. The head rest 3 has a main part 8, against which the occupant of the seat rests his or her head, and projecting parts 9, which project downwards. The supporting rods 7 extend into the projecting parts 9 of the head rest 3.

A plate 10 is fastened against a lower surface 11 of the protruding part 5 of the holder 1, with fastening means.

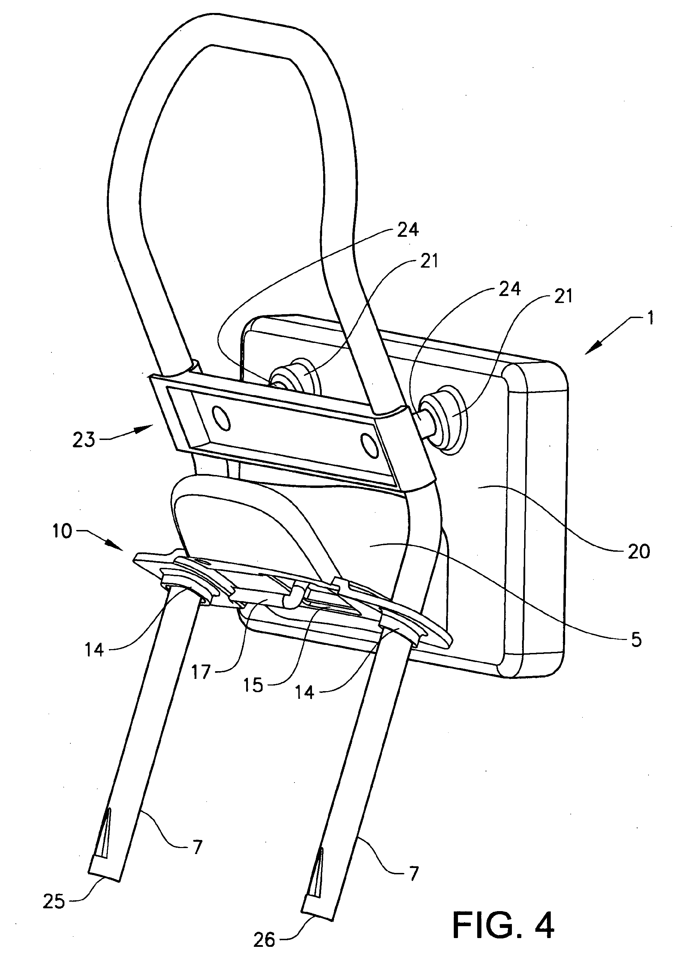

Figure 3 shows an exploded view of the holder 1 and the plate 10, shown from the front of the head rest 3. The plate 10 is elongated and has numeral fastening holes 12 for the fastening means. Further the plate 10 has two holes 13, which are provided in the outer ends of the elongated plate 10. The holes 13 have flanging 14 around the holes 13 to achieve stability in the plate 10. Further, the supporting rods 7 are provided in the holes 13 in an assembled state. On both sides of an aperture 15, the plate 10 has two transverse bents 16, provided between the aperture 15 and the holes 13 for the supporting rods 7. Further, the bents 16 achieve stability in the plate 10. In the middle of the plate 10, at the protruding part 5 of the holder 1, shown in Figure 2, the aperture 15 is provided, through which cables 17 (see Fig. 4) from the infotainment unit 2 are provided. The cables 17 are e.g. cables for power supply etc. The cables 17 are connected with corresponding in the back rest 4.

Further the plate 10 has the function of a cover plate, which covers the greater part of an opening 18 in the protruding part 5 of the holder 1. One part of the opening 18 coincides with the aperture 15 in the plate 10, to be able to draw the cables 17 from the infotainment unit 2 and connect these to the cables in the back rest 4.

Further, Figure 3 shows the holder 1, which preferably is injection moulded. The holder 1 is provided with the protruding part 5, wherein mounting holes 19 are provided. The plate 10 is fastened with multiple fastening means in the mounting holes 19, in the assembled state. On a front side 20 of the holder 1 there is provided shoulders 21 with mounting holes 22.

Figure 4 shows an assembled state of the mounting arrangement, wherein the foamed head rest 3 is omitted for the sake of clarity. Figure 4 shows the supporting rods 7, the plate 10, the holder 1 and a bracket 23. The holder 1 is attached to the supporting rods 7 by means of the bracket 23. The bracket 23 has protrusions 24, preferably two, which protrude backwards towards the holder 1. The bracket 23 is attached to the supporting rods 7 and is embedded in the foamed head rest 3. The protrusions 24 extend on a level with a rear surface of the head rest 3. Apertures are made in the foamed head rest 3 at the protrusions 24, to uncover these and be able to attach the protrusions 24 on the bracket 23 to the holder 1, with fastening means. The protrusions 24 are attached to the shoulders 21 on the holder 1:

The supporting rods 7 are shaped from a tube profile, in one piece. The supporting rods 7 are bent in a U-shape, and thus have two free ends 25, 26. The free ends 25, 26 are mounted in an upper part (not shown), of the back rest 4 and the free ends 25, 26 are connected to the supporting framework in the back rest 4 of the seat.

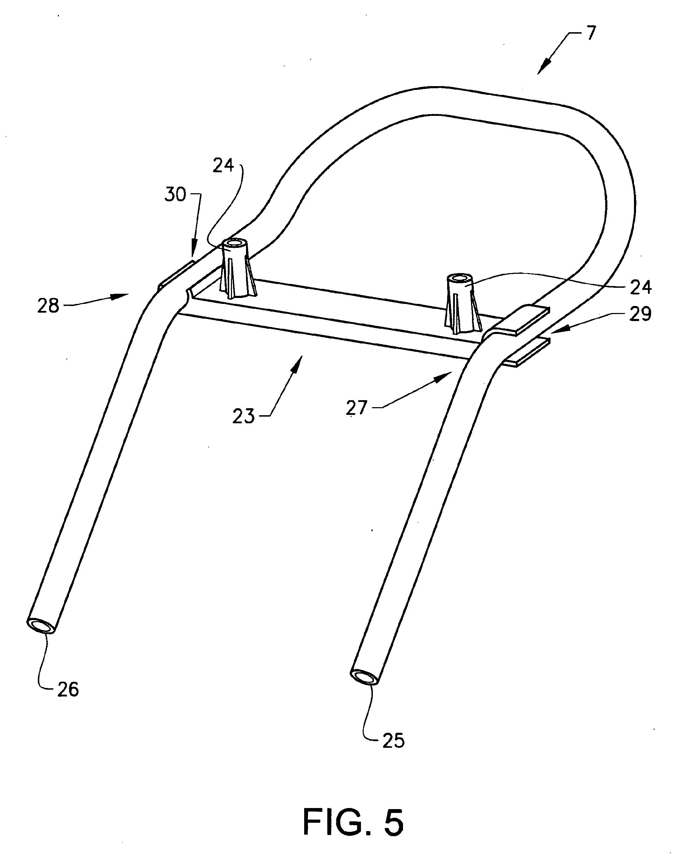

Figure 5 shows the bracket 23 mounted on the supporting rods 7. The bracket 23 is elongated and extends between the supporting rods 7. The bracket 23 has a first and a second snap connection 27, 28, which are provided in the ends of the bracket 23. The first and second snap connections 27, 28 are snapped around the supporting rods 7 in an assembled state. The snap connections 27, 28 are U-shaped with open parts 29, 30. The first snap connection 29 has the open part directed, in an assembled state, towards one of the sides in the vehicle. The second snap connection 30 has the open part directed, in an assembled state, towards the front or the rear of the vehicle. The bracket is also provided with the protrusions 24, which protrude from one of the elongated surfaces which extend between the supporting rods 7.

The method for mounting the infotainment unit 2 on a rear surface of a head rest 3 is made in a number of steps. The method comprises the step of preassembly of the bracket 23 on the supporting rods 7, by snap on, whereafter the bracket 23 and the supporting rods 7 are over moulded, by an expander material. Holes are drilled in the foamed head rest 3 at the protrusions 24, to uncover these.

The head rest 3 is provided upside down in a mounting fixture where the plate 10, is slided onto the supporting rods 7. At this stage, the holder 1 and the infotainment plate 2 is hanging loose, attached to the plate 10 by its cables 17 and connectors. The plate 10 is slided along the supporting rods 7 until the holes at the protrusions 24, in the expanded material, can be matched to the mounting holes in the shoulders 21 of the holder 1. The holder 1 is attached to the protrusions 24, with fastening means, such as screws, from an inside (not shown) of the holder 1.

In another step the plate 10 is fastened onto the holder 1 with fastening means, whereafter the infotainment unit 2 is attached to the holder 1 by screws or other fastening means. The assembled head rest 3 with holder 1 and infotainment unit 2 is mounted onto the back rest 4, by sliding the supporting rods 7 into the back rest 4. The cables 17 and the connector provided in the head rest 3 are drawn through the aperture 15 in the plate 10 and are connected to the corresponding cables and the mating connector in the back rest 4, before the assembled head rest 3 is pushed down to a locked position in the back rest 4.

The invention is not limited to the above examples, but may be varied freely within the scope of the appended claims.

## Claims

1. Mounting arrangement for an infotainment unit, said arrangement comprising a housing (1, 5), a head rest (3), supporting rods (7) embedded in the head rest (3), wherein the supporting rods (7) are mountable on a back rest (4) of a seat, and a plate (10) which is attached to the supporting rods (7) and to the housing (1, 5), which housing is attachable to the infotainment unit (2), **characterized in that** a bracket (23) is embedded into the head rest (3), that the bracket (23) is attached to the supporting rods (7), and further that the bracket (23) is attached to an upper part (21) of the housing (1, 5) and the plate (10) is attached to a lower part (11, 13) of the housing (1, 5).

2. Mounting arrangement according to claim 1, **characterized in that** the bracket (23) is provided with protrusions (24), which are provided with through holes to attach the housing to the supporting rods (7).

3. Mounting arrangement according to claim 2, **characterized in that** the protrusions (24) are directed backwards, towards the housing.

4. Mounting arrangement according to claim 2 or 3, **characterized in that** the protrusions (24) extend on a level with a rear surface of the head rest.

5. Mounting arrangement according to claim 2-4, **characterized in that** the protrusions (24) are made in a collapsible and energy absorbing material, to be able to absorb impact forces on the infotainment unit (2) and the housing.

6. Mounting arrangement according to claim 1 or 2, **characterized in that** the housing is attached to the plate (10) by a joint axis provided on a rear edge of the plate, which joint axis allows the housing to turn during an impact.

7. Mounting arrangement according to claim 6, **characterized in that** the housing has a part protruding forwards, and placed between the back rest (4) and the head rest (3), wherein which protruding part is attached to the plate (10) by fastening means.

8. Mounting arrangement according to claim 1, **characterized in that** the protrusions (24) are directed downwards, towards the back rest (4).

9. Vehicle comprising the mounting arrangement according to claim 1.

## Patentansprüche

1. Anbringvorrichtung für eine Informationsunterhaltungseinheitwobei die Vorrichtung, umfasst
ein Gehäuse (1, 5),
eine Kopfstütze (3),
Stützstangen (7), die in die Kopfstütze (3) eingebettet sind, wobei die Stützstangen (7) an einer Rückenlehne (4) eines Sitzes anbringbar sind, und
eine Platte (10), die an den Stützstangen (7) und an dem Gehäuse (1, 5) befestigt ist,
wobei das Gehäuse an der Informationsunterhaltungseinheit (2) befestigbarist,
**dadurch gekennzeichnet,**
**dass** eine Klammer (23) in die Kopfstütze (3) eingebettet ist,
**dass** die Klammer (23) an den Stützstangen (7) befestigt ist, und
**dass** die Klammer (23) ferner an einem oberen Abschnitt (21) des Gehäuses (1, 5) befestigt ist und die Platte (10) an einem unteren Abschnitt (11, 13) des Gehäuses (1, 5) befestigt ist.

2. Anbringvorrichtung nach Anspruch 1, **dadurch gekennzeichnet, dass** die Klammer (23) mit Vorsprüngen (24), die mit Durchgangslöchern zum Befestigen des Gehäuses an den Stützstangen (7) versehen sind, versehen ist.

3. Anbringvorrichtung nach Anspruch 2, **dadurch gekennzeichnet, dass** die Vorsprünge (24) nach hinten in Richtung des Gehäuses gerichtet sind.

4. Anbringvorrichtung nach Anspruch 2 oder 3, **dadurch gekennzeichnet, dass** die Vorsprünge sich auf einem Niveau mit der hinteren Oberfläche Kopfstütze erstrecken.

5. Anbringvorrichtung nach Anspruch 2-4, **dadurch gekennzeichnet, dass** die Vorsprünge (24) aus einem kollabierbarenund energieaufnehmenderMaterial hergestellt sind, um in der Lage zu sein, Stoßkräfte auf die Informationsunterhaltungseinheit (2) und das Gehäuse aufzunehmen.

6. Anbringvorrichtung nach Anspruch 1 oder 2, **dadurch gekennzeichnet, dass** das Gehäuse an der Platte (10) durch eine Gelenkachse, die auf einem hinteren Rand der Platte vorgesehen ist, befestigt ist, wobei die Gelenkachse es dem Gehäuse gestattet, sich während einem Stoß zu drehen.

7. Anbringvorrichtung nach Anspruch 6, **dadurch gekennzeichnet, dass** das Gehäuse einen Abschnitt aufweist, der nach vorne hervorsteht und der zwischen der Rückenlehne (4) und der Kopfstütze (3) angeordnet ist, wobei der hervorstehende Abschnitt an der Platte (10) mit Befestigungsmittelnbefestigt ist.

8. Anbringvorrichtung nach Anspruch 1, **dadurch gekennzeichnet, dass** die Vorsprünge (24) in Richtung der Rückenlehne (4) gerichtet sind.

9. Fahrzeug, umfassend die Anbringvorrichtung nach Anspruch 1.

## Revendications

1. Agencement de montage pour une unité d'info-divertissement, ledit agencement comprenant un boîtier (1, 5), un appui-tête (3), des tiges de support (7) insérées dans l'appui-tête (3), où les tiges de support (7) peuvent être montées sur un dossier (4) d'un siège, et une plaque (10) qui est attachée aux tiges de support (7) et au boîtier (1, 5), lequel boîtier peut être attaché à l'unité d'info-divertissement (2), **caractérisé en ce qu'**une console (23) est insérée dans l'appui-tête (3), **en ce que** la console (23) est attachée aux tiges de support (7), et en outre **en ce que** la console (23) est attachée à une partie supérieure (21) du boîtier (1, 5) et la plaque (10) est attachée à une partie inférieure (11, 15) du boîtier (1, 5).

2. Agencement de montage selon la revendication 1, **caractérisé en ce que** la console (23) est munie de saillies (24), qui sont prévues avec des trous traversant pour attacher le boîtier aux tiges de support (7).

3. Agencement de montage selon la revendication 2, **caractérisé en ce que** les saillies (24) sont dirigées en arrière, vers le boîtier.

4. Agencement de montage selon la revendication 2 ou 3, **caractérisé en ce que** les saillies (24) s'étendent sur un niveau avec une surface arrière de l'appui-tête.

5. Agencement de montage selon les revendications 2 à 4, **caractérisé en ce que** les saillies (24) sont faites d'un matériau compressible et absorbant l'énergie, pour pouvoir absorber des forces d'impact sur l'unité d'info-divertissement (2) et le boîtier.

6. Agencement de montage selon la revendication 1 ou 2, **caractérisé en ce que** le boîtier est attaché à la plaque (10) par un axe d'articulation prévu sur un bord arrière de la plaque, lequel axe d'articulation permet au boîtier de tourner durant un impact.

7. Agencement de montage selon la revendication 6, **caractérisé en ce que** le boîtier possède une partie faisant saillie vers l'avant, et placée entre le dossier (4) et l'appui-tête (3), où laquelle partie en saillie est attachée à la plaque (10) par des moyens de fixation.

8. Agencement de montage selon la revendication 1, **caractérisé en ce que** les saillies (24) sont dirigées vers le bas, vers le dossier (4).

9. Véhicule comprenant l'agencement de montage selon la revendication 1.
